# EUROPEAN PATENT APPLICATION

(11) **EP 1 754 622 A1**
(43) Date of publication of application: **21.02.2007**
(21) Application number: 05719205.6
(22) Date of filing: 17.02.2005
(51) Int. Cl.: B60K 35/00

(54) **VEHICLE INFORMATION DISPLAY DEVICE AND VEHICLE INFORMATION DISPLAY METHOD**

(30) Priority: 27.02.2004 JP 2004053590
(71) Applicant: NIPPON SEIKI CO., LTD., Nagaoka-shi, Niigata 940-8580 (JP)
(72) Inventor: IKARASHI, Hideki c/o Nippon Seiki Co. Ltd, Niigata 940 (JP); TAMURA, Shigeaki c/o Nippon Seiki Co. Ltd, Niigata 940 (JP); IKARASHI, Hideki c/o Nippon Seiki Co. Ltd, Niigata 940 (JP)
(74) Representative: Jackson, Richard Eric
(86) International application number: PCT/JP2005/002403
(87) International publication number: WO 2005/082665

(57) **Abstract**

A vehicle information display apparatus in which an optimal display is achieved according to attributes, contents, and types of displayed information and preference of a user, and the like while constraining upsizing of an entire display area is provided.

In a vehicle information display apparatus including a meter device (first display means) for displaying a first display image 17, a multi-display (second display means) 2 for displaying a second display image 24, and control means 110 for controlling the operation of the meter device 1 and the multi-display 2, and displaying the first and second display images 17, 24 in a predetermined display area 5, the control means 110 performs a changing/switching process for switching the display mode of the first display image 17 in association with the change of the display mode of the second display image 24 (enlargement and reduction of a display range 25).

## Description

### [Technical Field]

The present invention relates to a vehicle information display apparatus mounted, for example, to an instrument panel of an automotive vehicle for providing various information (for example, measured information such as the vehicle speed, the number of engine revolution, the remaining amount in a tank, the water temperature, the travel distance, and the time of the day, navigation information, and camera imaging information) to an observer visually and a method of displaying vehicle information and, more specifically, to a vehicle information display apparatus for displaying information display images formed by a plurality of display means within a common display area such as a panel member or a screen, and a method of displaying vehicle information.

### [Background Art]

A vehicle information display apparatus of this type disclosed in Patent Document 1 shown below is known. In the vehicle information display apparatus disclosed in Patent Document 1, a display area of the display apparatus is divided into left and right areas; a fixed display area and an interchangeable display area, so that a pointer-type display (vehicle speed display and remaining fuel amount display by a pointer-type analogue meter) is carried out constantly in the fixed display section, and a pointer-type display (display of the number of engine revolution and display of a water temperature gauge by a pointer-type analogue meter) and navigation information display (display on a liquid crystal display) are switched in the interchangeable display section. According to the vehicle information display apparatus, necessary information can be displayed in the interchangeable display area while displaying information which is important for traveling of the vehicle constantly displayed in the fixed display area, as well as various and a large amount of information can be displayed in a multiplex manner or in an interchangeable manner by utilizing the display on the liquid crystal display.
[Patent Document 1] JP-A-2002-046505

### [Disclosure of Invention]

### [Problems to be Solved by the Invention]

However, the vehicle information display apparatus disclosed in the above-described Patent Document 1 has following problems. Although a multiplex or interchangeable display is possible by the liquid crystal display in the interchangeable display area, the display range (surface area or a display size) is not changed and is always constant, and hence when displaying fine images such as navigation information, monitor (camera) information, and a large amount of character information in a relatively narrow display range, display of image itself may become difficult, or even though it can be displayed, the display may be difficult to recognize. On the other hand, when displaying a simple image such as only a warning mark or a small amount of character information in a relatively large display range, the image occupies a surface area of the entire display more than necessary, and hence information of other display devices (such as the pointer-type analogue meter) cannot be displayed. Therefore, there is still a room for improvement.

Therefore, in order to solve the above-described problems, the invention provides a vehicle information display apparatus and a method of displaying vehicle information in which an optimal display can be achieved according to attributes (characteristic, property), contents, and types of displayed information and preference of a user, and the like while constraining upsizing of an entire display area.

### [Means for Solving the Problem]

In order to achieve the above-described object, the invention provides a vehicle information display apparatus including first display means for displaying first predetermined information as a first display image, second display means for displaying second predetermined information as a second display image and control means for controlling operating states of the first and second display means, and displaying the first and second display images in a predetermined display area, characterized in that the first display means is adapted to be capable of switching between a displayed state and a hidden state of a part of the first display image, the second display means is adapted to be capable of enlarging and reducing the display range of the second display image, and the control means switches the part of the first display image into the hidden state in association with enlargement of the display range of the second display image and switches the part of the first display image into the displayed state in association with reduction of the display range of the second display image.

In order to achieve the above-described object, the invention provides a method of displaying vehicle information for displaying a first display image which provides a first predetermined information and whose display state is partly switched between a displayed state and a hidden state, and a second display image which provides a second predetermined information and whose display range is enlarged and reduced in a predetermined display area, characterized in that a part of the first display image is switched to the hidden state in association with enlargement of the display range of the second display image, and the part of the first display image is switched to the displayed state in association with reduction of the display range of the second display image.

The invention is characterized in that the control means determines whether or not the changing/switching conditions for switching the display of the first display image in association with the change of the display range of the second display image is satisfied according to the predetermined supplied information and, when the changing/switching conditions are satisfied, changes the display range of the second display image and switches the display of the first display image.

The invention is also characterized in that the changing/switching conditions can be changed by the user.

The invention is also characterized in that the first display means is a pointer-type display device, and the second display means is an image display device for displaying a plurality of different contents or types of the second predetermined information as the second display image in a multiplex or interchangeable manner.

The invention is also characterized in that the first display means and the second display means are arranged so as to oppose to each other with the intermediary of a transmissive reflecting member that combines the respective display images by transmitting the display image on one of the first display means and the second display means and reflecting the display image on the other one of them.

The invention is also characterized in that a concave surface mirror member that reflects the first and second display images combined through the transmissive reflecting member toward the user is further provided.

### [Advantages of the Invention]

According to the invention, a vehicle information display apparatus and a method of displaying vehicle information in which an initial object can be achieved and an optimal display can be obtained according to the attributes (characteristic, property), the contents, and the types of the displayed information and preference of the user, and the like while constraining upsizing of an entire display area can be provided.

### [Brief Description of the Drawings]

[Fig. 1] Fig. 1 is a drawing showing a schematic configuration of a vehicle information display apparatus according to a first embodiment of the invention.
[Fig. 2] Fig..2 is a front view of a meter device according to the same embodiment.
[Fig. 3] Fig. 3 is a front view of a multi-display according to the same embodiment.
[Fig. 4] Fig. 4 is a block diagram showing a system configuration of the vehicle information display apparatus according to the same embodiment.
[Fig. 5] Fig. 5 is a flowchart showing an operating state of the vehicle information display apparatus according to the same embodiment.
[Fig. 6] Fig. 6 is a front view of a display example of the vehicle information display apparatus according to the same embodiment.
[Fig. 7] Fig. 7 is a front view of another display example of the vehicle information display apparatus according to the same embodiment.
[Fig. 8] Fig. 8 is a front view of another display example of the vehicle information display apparatus according to the same embodiment.
[Fig. 9] Fig. 9 is a front view of another display example of the vehicle information display apparatus according to the same embodiment.
[Fig. 10] Fig. 10 is a front view of another display example of the vehicle information display apparatus according to the same embodiment.
[Fig. 11] Fig. 11 is a front view of another display example of the vehicle information display apparatus according to the same embodiment.
[Fig. 12] Fig. 12 is a front view of another display example of the vehicle information display apparatus according to the same embodiment.
[Fig. 13] Fig. 13 is a front view of another display example of the vehicle information display apparatus according to the same embodiment.
[Fig. 14] Fig. 14 is a front view of another display example of the vehicle information display apparatus according to the same embodiment.
[Fig. 15] Fig. 15 is a front view of another display example of the vehicle information display apparatus according to the same embodiment.
[Fig. 16] Fig. 16 is a front view of another display example of the vehicle information display apparatus according to the same embodiment.
[Fig. 17] Fig. 17 is a front view of a modification of the vehicle information display apparatus according to the invention showing a display example thereof.

### [Best Mode for Carrying Out the Invention]

Referring now to the drawings, an embodiment of a case in which a vehicle information display apparatus according to the invention is applied to a vehicle-mounted instrument apparatus will be described as an example.

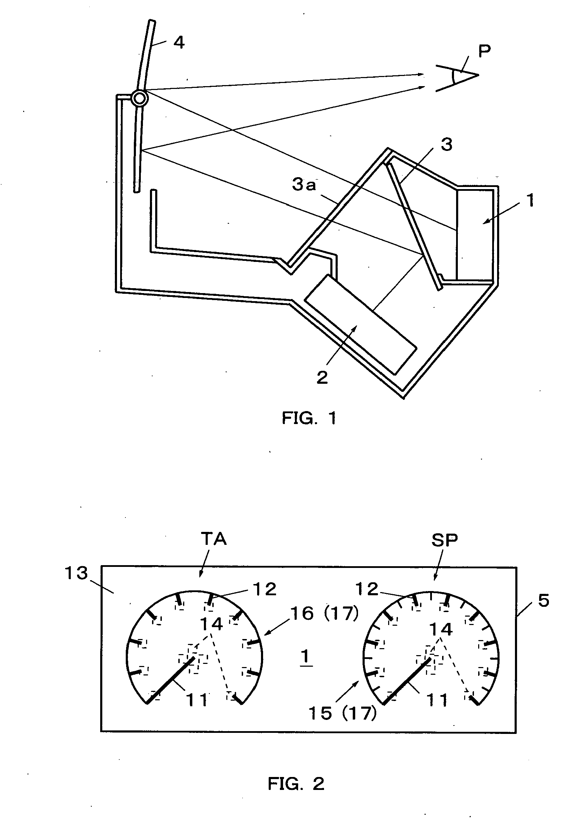

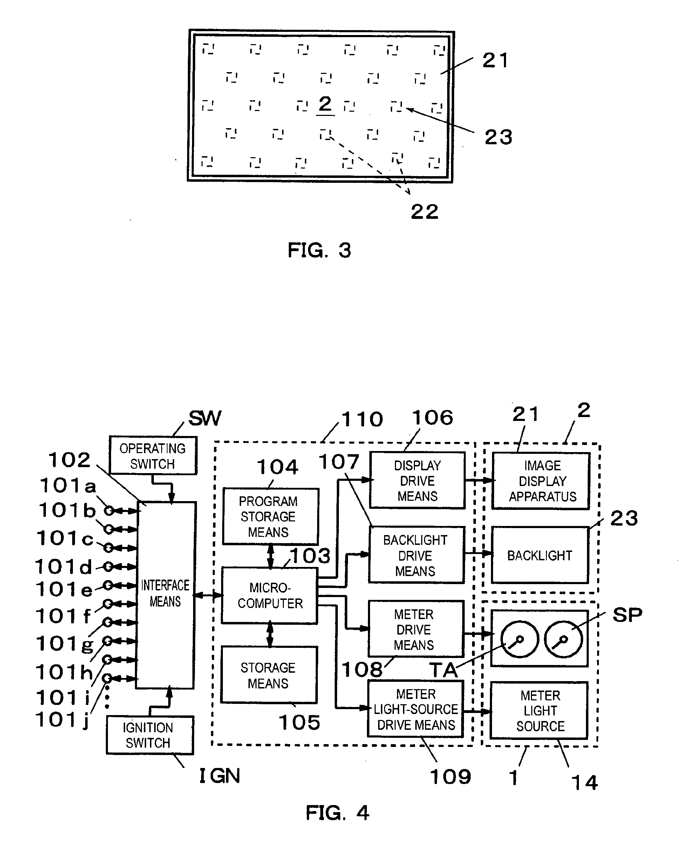

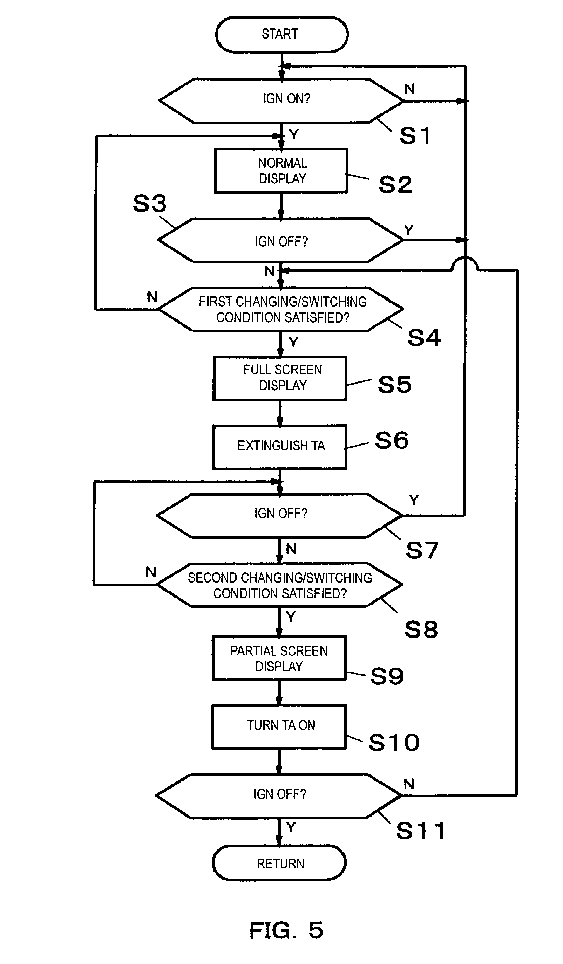

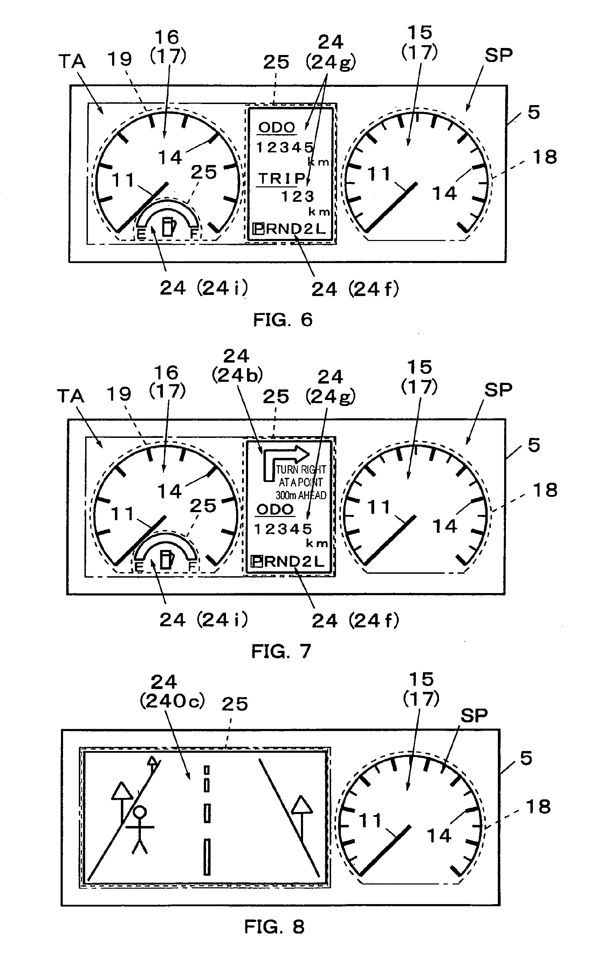

Fig. 1 to Fig. 16 illustrate a first embodiment of the invention. Fig. 1 is a drawing showing a schematic configuration of the vehicle information display apparatus according to this embodiment; Fig. 2 is a front view of a meter device according to this embodiment; Fig. 3 is a front view of a multi-display according to this embodiment; Fig. 4 is a block diagram showing a system configuration of the vehicle information display apparatus according to this embodiment; Fig. 5 is a flowchart showing an operating state of the vehicle information display apparatus according to this embodiment; and Fig. 6 to Fig. 16 are front views of display examples of the vehicle information display apparatus according to this embodiment.

In Fig. 1, the vehicle information display apparatus includes a meter device (a pointer-type display device) 1 employed as first display means, a multi-display 2 employed as second display means, a transmissive reflecting member 3 arranged between the meter device 1 and the multi-display 2, and a mirror member 4 for reflecting a transmitted and reflected image (described later) formed through the transmissive reflecting member 3 to the direction of a line of sight of a user P. Reference numeral 3a designates a transparent protecting cover.

The meter device 1 is, for example, composed of a pointer-type display device including a speed meter (first meter device) SP and a tachometer (second meter device) TA arranged on the right side and the left side as shown in Fig. 2, each including a pointer 11, a scaled plate 13 having an index part 12 such as graduation or characters which is to be pointed by the pointer 11, and a meter light source 14 composed of a light-emitting diode for causing the pointer 11 and the scaled plate 13 to emit light and forms two first display images 17 including a light-emitting display image 15 of the speed meter SP and a light-emitting display image 16 of the tachometer TA as first predetermined information (measured information relating to the vehicle speed, and measured information relating to the number of engine revolution) by controlling the operating state of the pointer 11 by control means, described later, according to the measured amount and illuminating the meter light source 14, so that the first and second light-emitting display images 15, 16 can be displayed or hidden by illuminating or extinguishing the meter light source 14 independently for the speed meter SP and the tachometer TA by the control means. The first display means is not limited to the pointer-type meter, and a digital display element may be employed, and the contents of display thereof may be those other than the measured information.

Accordingly, the meter device 1 is configured so as to be capable of switching the part of the first display image 16 (the first and second light-emitting display images 15, 16) between the displayed state and the hidden state.

As shown in Fig. 3, the multi-display 2 is composed of a display element (image display device) 21 formed, for example, of TFT (thin film transistor) type liquid crystal panel, and a backlight device 23 including light-emitting elements 22 composed, for example, of light-emitting diodes for illuminating the display element 21 from behind. The display operation is controlled by the control means, described later, so that the contents or the image information different in type (displayed later) are displayed as second predetermined information in a multiplex manner or a interchangeable manner, and a second display image 24 (see drawings from Fig. 6 on) as the light-emitting display image of the image information is formed by illuminating the backlight device 23. The multi-display 2 is adapted to be capable of enlarging or reducing a display range 25 (surface area required for displaying the information) of the second display image 24 via the control means. The display element used for the second display means can be selected as desired, and may be a self-emitting element composed of, for example, an organic/inorganic EL (electroluminescence) display. In this case, the backlight device 23 is not necessary.

The transmissive reflecting member 3 is composed of a half mirror formed by adhering a reflecting film such as a metallic thin film on a light-transmissive synthetic resin plate by means of deposition or the like or a synthetic resin plate of a dark color, and allows the first display image 17 formed by the meter device 1 to be transmitted toward the mirror member 4 and reflects the second display image 24 of the multi-display 2 toward the mirror member 4, thereby combining the first display image 17 and the second display image 24. Therefore, when the meter device 1 and the multi display 2 are viewed on the basis of the transmissive reflecting member 3, the meter device 1 and the multi-display 2 are arranged so that the display surfaces thereof oppose to each other with the intermediary of the transmissive reflecting member 3. In this embodiment, the meter device 1 and the multi-display 2 are arranged in such a manner that the second display image 24 is displayed so as not to be superimposed on the first light-emitting display image 15 but to be superimposed on the second light-emitting display image 16 when being displayed in a maximum size in the display range 5.

The mirror member 4 is composed of a concave surface mirror member formed by adhering a reflecting film formed of metallic thin film, for example, on a light-transmissive synthetic resin material or a glass material by means of deposition or the like, and displays the first and second display images 17, 24 remotely in the predetermined display area 5 (see the drawings from Fig. 6 on) by reflecting the first and second display images 17, 24 combined through the transmissive reflecting member 3 toward the user P.

Referring now to Fig. 4, the system configuration of the vehicle information display apparatus according to this embodiment will be described. The vehicle information display apparatus here includes interface terminals 101a to 101j... for entering/outputting various information, described later, an operating switch SW which can be operated manually by the user P, interface means 102, a microcomputer 103 to be connected to the interface means 102, program storage means 104 and storage means 105 for storing required data connected respectively to the microcomputer 103, display drive means 106, backlight drive means 107, meter drive means 108, and meter light-source drive means 109 connected respectively to the output side of the microcomputer 103, and the display element 21, the backlight device 23 (which constitute the multi-display 2), and the speed meter SP and the tachometer TA (which constitute the meter device 1) connected respectively to the output sides of the display drive means 106, the backlight drive means 108, the meter drive means 107 and the meter light-source drive means 109 and, in this embodiment, the microcomputer 103, the program storage means 104, the storage means 105, the display drive means 106, the backlight drive means 107, the meter drive means 108, and the meter light-source drive means 109 constitute control means 110. An ignition switch IGN is connected to the microcomputer 103 via the interface means 102.

The microcomputer 103 processes supplied information (signal) received via the interface terminals 101a to 101j..., the switch SW, the ignition switch IGN, and the interface means 102 and, on the basis of the processing result, operates the display element 21, the back light device 23, the speed meter SP, and the tachometer TA respectively via the display drive means 106, the backlight drive means 107, the meter drive means 108, and the meter light-source drive means 109.

A supplied information processing program implemented by the microcomputer 103 and a display processing program for operating the vehicle information display apparatus including the meter device 1 and the multi-display 2 on the basis of the result of processing thereof are stored in the program storage means 104, while image information to be displayed on the multi-display 2 is stored in the storage means 105 as an image data. The processing programs or the image data may be stored in storage means provided in the microcomputer 103. In the same manner, it is also possible to integrate functions of the display drive means 106, the backlight drive means 107, the meter drive means 108, and the meter light-source drive means 109 in the microcomputer 103.

The supplied information supplied to the microcomputer 103 through the interface terminals 101a to 101j... is as follows in this embodiment. The interface terminal 101a is a terminal for entering the imaging information of a camera (not shown) mounted to a vehicle body for acquiring image information of the rear side of the vehicle body, the interface terminal 101b is a terminal for entering navigation information acquired though a navigation (GPS) receiving device, the interface terminal 101c is a terminal for entering the imaging information of a night-vision camera (not shown) mounted to the vehicle body for acquiring the night-image information in front of the vehicle body during night time, the interface terminal 101d is a terminal for entering traffic information transmitted from road information observation device, the interface terminal 101e is a terminal for entering audio information from a vehicle-mounted audio, the interface terminal 101f is a terminal for entering shift information from a shift position sensor of a transmission device, the interface terminal 101g is a terminal for entering vehicle speed information from a vehicle speed sensor for detecting the vehicle speed, the interface terminal 101h is a sensor for entering information on the number of revolution from a revolution sensor for detecting the number of engine revolution, the interface terminal 101i is a terminal for entering fuel information from a fuel sensor for detecting the amount of fuel in the fuel tank, the interface terminals 101j ... are terminals for entering the detected information from various sensors (state detecting means) for detecting various states (abnormal states) of the vehicle body.

The operating switch SW in this embodiment is a switch for changing over the display type, the contents, and the setting of the multi-display 2, and resetting the display value. The ignition switch IGN is a switch for starting the engine and turning the power of the various electrical components (including the vehicle information display apparatus) ON and OFF by the operation of the user P. The switching signals on the basis of the operation of these switches are supplied to the microcomputer 103 as switching information via the interface means 102.

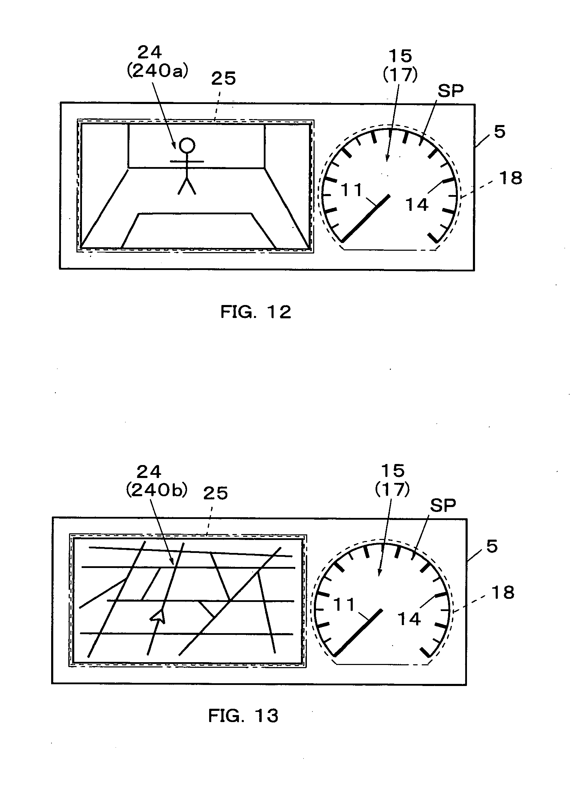

Subsequently, the processing by the control means 110 relating to the input information received through the respective interface means 101a to 101j will be described.
The imaging information supplied to the microcomputer 103 through the interface terminal 101a is processed through a display program stored in the program storage means 104 and, on the basis of the processed result, is displayed on the display element 21 through the display drive means 106 as a second display image 240a (see Fig. 12).

Subsequently, the navigation information supplied to the microcomputer 103 through the interface terminal 101b is processed in the same manner, and is displayed on the display element 21 through the display drive means 106 as the second display image 24b, 240b (see Fig. 7 and Fig. 13).

Subsequently, the imaging information of the night-view camera supplied to the microcomputer 103 through the interface terminal 101c is processed in the same manner, and is displayed on the display element 21 through the display drive means 106 as a second display image 240c (see Fig. 8).

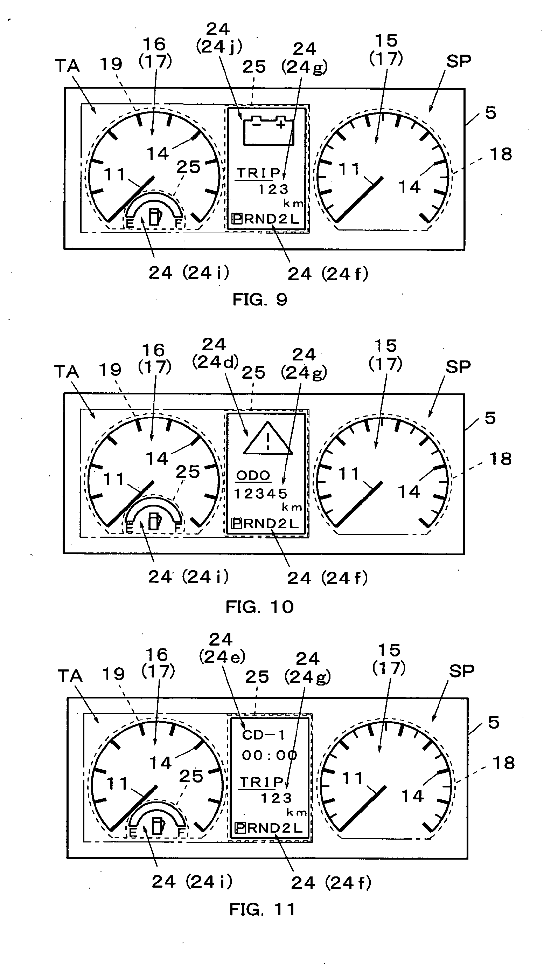

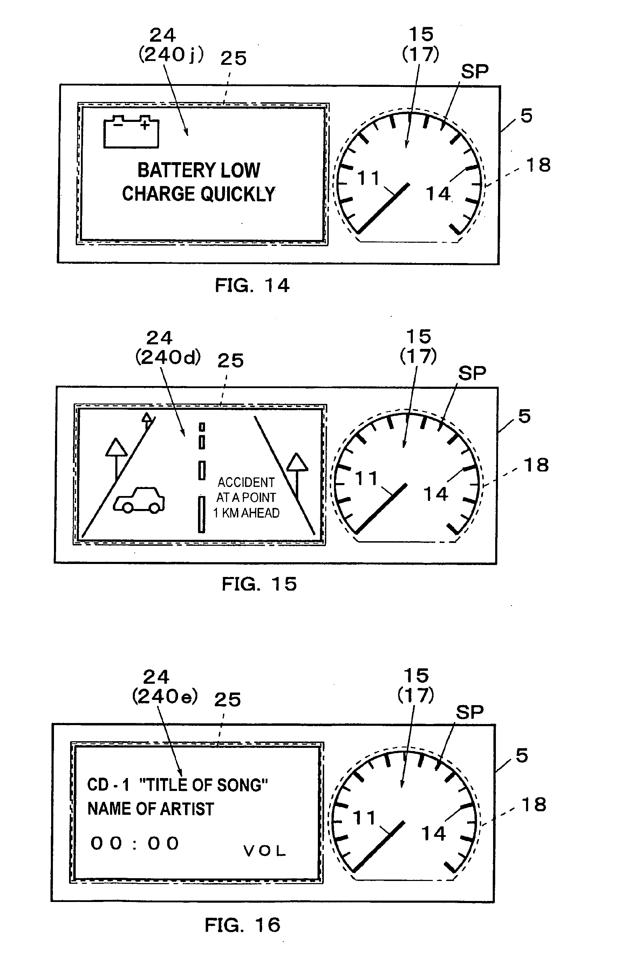

Subsequently, the traffic information supplied to the microcomputer 103 through the interface terminal 101d is processed in the same manner, and is displayed on the display element 21 through the display drive means 106 as second display images 24d and 240d (see Fig. 10 and Fig. 15).

Subsequently, the audio information supplied to the microcomputer 103 through the interface terminal 101e is processed in the same manner, and is displayed on the display element 21 through the display drive means 106 as second display images 24e, 240e (see Fig. 11 and Fig. 16).

Subsequently, the shift information supplied to the microcomputer 103 through the interface terminal 101f is processed in the same manner, and is displayed on the display element 21 through the display drive means 106 as a second display image 24f (see Fig. 6, Fig. 7, Fig. 9, Fig. 10 and Fig. 11).

Subsequently, the vehicle speed information supplied to the microcomputer 103 through the interface terminal 101g is processed through the meter drive program stored in the program storage means 104 and, on the basis of the processed result, the pointer 11 is activated through the meter drive means 108, whereby the speed information is displayed for the user P as the first display image 17 (speed meter SP) (Fig. 6 to Fig. 16). The microcomputer 103 also performs the computation process of the travel distance thereof on the basis of the vehicle speed information. The processed result is displayed on the display element 21 through the display drive means 106 as a second display image 24g (see Fig. 6, Fig. 7, Fig. 9, Fig. 10, and Fig. 11).

Subsequently the number of revolution information supplied to the microcomputer 103 through the interface terminal 101h is processed in the same manner, an the pointer 11 is operated through the meter drive means 108, whereby the number of engine revolution information is displayed as the first display image 17 (tachometer TA) to the user P (see Fig. 6, Fig. 7, Fig. 9, Fig. 10 and Fig. 11).

Subsequently, the fuel information supplied to the microcomputer 103 through the interface terminal 101i is processed through the display program and, on the basis of the processed result, is displayed on the display element 21 through the display drive means 106 as a second display image 24i (see Fig. 6, Fig. 7, Fig. 9, Fig. 10, and Fig. 11).

Subsequently, in a case in which the detected information supplied to the microcomputer 103 through the interface terminals 101j..., for example, the warning information relating to deficiency of the vehicle-mounted battery, is detected, it is processed in the same manner as described above, and it is displayed on the display element 21 through the display drive means 106 as second display images 24j, 240j (see Fig. 9 and Fig 14).

Then, the type of the second display image 24 to be displayed on the multi-display 2 is switched by operating the operating switch SW.

Referring now to Fig. 5, the display operation in a case in which the vehicle information display apparatus according to this embodiment is mounted on the automotive vehicle will be described.

The microcomputer 103 determines whether or not the ignition switch IGN is changed from OFF to ON (the position of the terminal may either be the engine-start position or the accessory position) on the basis of operating information (switching information) of the ignition switch IGN. When it is determined to have been switched to ON (Y), the procedure goes to Step S2, and causes the vehicle information display apparatus (the meter device 1 and the multi-display 2) to provide a normal display. The normal display in this embodiment is as shown in Fig. 6, and the meter device 1 displays the first and second light-emitting display images 15, 16 (SP, TA) in the display area 5 at a distance on the left and right as the first display image 17, and the multi-display 2 displays the second display image 24i as the fuel information, the second display image 24g as the travel distance information (odd, trip information), and the second display image 24f as the shift information between the first and second light-emitting display images 15, 16. In Fig. 6 to Fig. 16, a chain line represents an outer dimension of the multi-display 2, and a broken line represents a display range 25 of the light-emitting image formed by the multi-display 2 (the non-light-emitting area is excluded), and display ranges 18, 19 of the first and second light-emitting display images 15, 16 (SP, TA). In the normal state in Step S2, all the first and second light-emitting display images 15, 16 (SP, TA) are in the displayed state, and a screen on the side of the multi-display 2 which is overlapped with the second light-emitting display image 16 as a part of the second display image 17 is partly hidden (non-light-emitting state) on the left side thereof. Therefore, the side of the meter device 1 in which the display ranges 18, 19 are entirely displayed with light emission is converted into a detail display (enlarged) mode, and the side of the multi-display 2 in which a part of the display range 25 is displayed with light emission is converted into a simple display (reduced) mode.

Subsequently, in Step S3, whether or not the ignition switch IGN has been switched from ON to OFF is determined, and when it is determined not to have been switched to OFF (ON state is maintained) (N), the procedure goes to the next Step S4, where whether or not the first changing/switching condition is satisfied is determined. The first changing/switching condition here is the switching condition to switch the meter device 1 side to the simple display mode (a mode in which the second light-emitting display image 16 as a part of the first display image 17 is hidden and only the first light-emitting display image 15 is displayed) and the multi-display 2 side to the detailed display mode (a mode in which the second display image 24 is displayed in detail in an enlarged screen, that is, in a full screen) from the normal display shown in Fig. 6 (the meter device 1 side is in the detailed display mode, and the multi-display 2 side is the simple display mode).

Here, for example, when the shift information which notifies the microcomputer 103 of the fact that the shift position is switched to "R (reverse)" through the interface terminal 101f is supplied, the microcomputer 103 determines that the first changing/switching condition in Step S4 is satisfied (Y), and then in Step S5, enlarges the screen size on the multi-display 2 side into the detailed display (full screen display) mode, displays the imaging information acquired through the interface terminal 101a on the full screen in detail (see Fig. 12), and then performs the first changing/switching process to extinguish, that is, hide the second light-emitting display image (TA) on the meter device 1 side to achieve the simple display in Step S6. As a processing procedure, the process in Step S6 is performed after the process in Step S5. However, the process in Step S5 (to switch into the full screen display and display the imaging information) and the process in Step S6 (to extinguish TA) are actually recognized as the simultaneous process. When the first condition is not satisfied (N) as the result of determination in Step S4, the normal display in Step S2 is maintained.

Although the case to achieve the display as shown in Fig. 12 as the first changing/switching condition has been exemplified and described here, for example, a case in which the display of the imaging information of the night-view camera is selected as shown in Fig. 8 by operation of the operation switch SW by the user P, or a case in which the detailed display of the navigation information as shown in Fig. 13 (see the second display image 24b in Fig. 7 for an example of the simple display), the detailed display of the warning information as shown in Fig. 14 (see the second display image 24j in Fig. 9 for an example of the simple display), the detailed display of the traffic information as shown in Fig. 15 (see the second display image 24d in Fig. 10 for an example of the simple display), and the detailed display of the audio information as shown in Fig. 16 (see the second display image 24e in Fig. 11 as an example of the simple display) is selected according to the customization by the user P are also included.

Subsequently, in Step S7, the same determination as in Step S3 is performed, and when the result of determination is OFF (Y), the procedure goes back to Step S1, and when it is ON (that is, the ON state is maintained) (N), the procedure goes to Step S8, where whether or not the second changing/switching condition is satisfied is determined. The second changing/switching condition here means a condition for changing the display mode from Step S6 on (the simple display mode on the meter device 1 side, and the detailed display mode on the multi-display 2 side) to the normal display as in Step S2 (the detailed display mode on the meter device 1 side, and the simple display mode on the multi-display 2 side).

For example, when the shift information which notifies the microcomputer 103 of the fact that the shift position is switched to a mode other than "R (reverse)" through the interface terminal 101f is supplied, the microcomputer 103 determines that the second changing/switching condition in Step S8 is satisfied (Y) and, in Step S9, reduces the screen size on the multi-display 2 side into the simple display (partial screen display) mode, and displays the same display as in Step S2 instead of the imaging information acquired through the interface terminal 101a (see Fig. 6), and then in Step S10, performs a second changing/switching process for turning the second light-emitting display image (TA) on the meter device 1 side ON, that is, switching the same into the detailed display mode as the displayed state. As the processing procedure, the process in Step S109 is performed after the process in Step S9. However, the process in Step S9 (to switch into the partial screen and display the information as in Step S2) and the process in Step S10 (to turn TA ON) are actually recognized as the simultaneous processing. When the second changing/switching condition is not satisfied as the result of determination in Step S8 (N), the state after the Step S6 is maintained.

In this embodiment, the same display as in the case of the Step S2 is performed upon satisfaction of the second changing/switching condition in Step S8. However, when the contents of display in the multi-display 2 are changed by operating the operating switch SW or the like (for example, when the display state is changed from the one shown in Fig. 6 to the states shown in Fig. 7, Fig. 9, Fig. 10, and Fig. 11), the state after change can be displayed.

In the next Step S11, determinations as in Steps S3 and S7 are performed, and when the result of determination here is "OFF" (Y), the procedure goes back to Step S1, and when it is "ON" (N), the procedure goes back to Step S4, where whether or not the first changing/switching condition is satisfied is determined again.

The setting for customization for the user P will now be described.
In this embodiment, the simple display mode including only the required minimum last information as shown in Fig. 7 (see the second display image 24b in the drawing) and the detailed display mode showing the position of the own-vehicle in a map as shown in Fig. 13 (see the second display image 240b in the drawing) are provided as the display modes (mode) of the navigation information for entering through the interface terminal 101b, and the simple display mode showing only a warning mark as shown in Fig. 9 (see the second display image 24j in the drawing) and the detailed display mode for displaying an article of the user's manual including the meaning of the mark and the countermeasure therefor in addition to the warning mark as text information as shown in Fig. 14 (see the second display image 240j in the drawing) are provided as the display mode of the warning information to be supplied through the interface terminal 101j. The simple display mode including only a reminder mark as shown in Fig. 10 (see the second display image 24d in the drawing) and the detailed display mode displaying the pickup image of the actual road condition as shown in Fig. 15 (see the second display image 240d in the drawing) are provided as the display mode of the traffic information to be supplied through the interface terminal 101d, and the simple display mode showing only the CD track number and the playing duration as shown in Fig. 11 (see the second display image 24e in the drawing), and the detailed display mode including the title of a song and the name of an artist and the like as shown in Fig. 16 (see the second display image 240e in the drawing) are provided as the display mode of the audio information to be supplied through the interface terminal 101e.

Then, these two information display modes (the simple display mode and the detailed display mode) are adapted to be capable of being selected or changed freely by the user P according to the preference of the user P, for example, by changing the set data stored in the control means 110 through the operating switch SW. According to the change of the setting as described above, the information set to the detailed display mode in the setting before change is changed into the simple display mode in the setting after change, and the information set to the simple display mode in the setting before the change is changed to the detailed display mode in the setting after the change. Therefore, the first and second changing/switching conditions are changed according to the change of the setting of the display mode as described above, that is, the conditions for switching the display mode of the first display image 17 are also changed in association with the change of the display mode of the second display image 24. For example, even when the warning information is supplied through the interface terminal 101j when the normal display mode (for example, see Fig. 6) is active, if the user P has set the display mode of the warning information to the simple display mode, the first changing/switching process is failed.

As described above, according to this embodiment, in the vehicle information display apparatus including the meter device (first display means) which displays the first display image 17 and the multi-display (second display means) 2 for displaying the second display image 24, and the control means 110 for controlling the operating state of the meter device 1 and the multi-display 2 and displaying the first and second display images 17, 24 in the predetermined display area 5, the meter device 1 is adapted to be capable of switching the displayed/hidden state of a part of the first display image 17 (the second light-emitting display image 16), the multi-display 2 is adapted to be capable of enlarging and reducing the display range of the second display image 24, and the control means 110 switches a part of the first display image 17 (the second light-emitting display image 16) into the hidden state (switches into the simple display mode) in association with the enlargement of the display range 25 of the second display image 24 (change into the detailed display mode) and switches a part of the first display image 17 (the second light-emitting display image 16) into the displayed state (switches into the detailed display mode) in association with the reduction of the display range of the second display image 24 (change into the simple display mode), so that the change of the display range 25 of the multi-display 2 and the partial switching between the displayed and the hidden state of the meter device 1 can be achieved in association with the change according to the attributes (characteristic, property), the contents, and the types of the displayed information and the preference of the user, and the like, whereby an optimal display is achieved according to the attributes (characteristic, property), the contents, and the types of the displayed information and the preference of the user P, and the like while constraining upsizing of the entire display area 5. Selection of the display mode between the first and second display images 17, 24 is arbitrary, and may be determined according to the attributes, the contents, and the types of the displayed information and the preference of the user P, and may also be determined according to the priority, the importance, the urgency, and the like of the displayed information.

In this embodiment, in the method of displaying vehicle information for displaying the first display image 17 whose state is switched between the displayed state and the hidden state for a part (the second light-emitting display image 16) thereof, and displaying the second display image 24 for enlarging or reducing the display range 25 in the predetermined display area 5, since a part (the second light-emitting display image) of the first display image 17 is switched to the hidden state (switched to the simple display mode) in association with the enlargement (change to the detailed display mode) of the display range 25 of the second display image 24, and a part (the second light-emitting display image 16) of the first display image 17 is switched to the display state (switched to the detailed display mode) in association with the reduction of the display range 25 of the second display image 24 (change of the simple display mode), the change of the display range 25 of the multi-display 2 and the switching of the partial display of the meter device 1 between the displayed state and the hidden state in association with the change can be achieved according to the attribute (characteristic, property), the contents, and the types of the display information, the preference of the user, and the like, whereby an optimal display can be achieved according to the attributes (characteristic, property), the contents, and the types of the displayed information and the preference of the user, and the like while constraining upsizing of the entire display area 5.

This embodiment is configured to determine whether or not the display range changing conditions for enlarging and reducing the display range 25 according to the predetermined supplied information are satisfied through the control means 110 (Step S4, Step S8) and, when the display range changing conditions are satisfied, display the second display image 24 in the enlarged or reduced display range 25. In this configuration, reliable switching operation can be ensured.

According to this embodiment, since the display range changing conditions can be changed by the user, the display can be selected according to the preference of the user P, and the usability can be improved.

According to this embodiment, since the first display means is the meter device (the pointer-type display device) and the second display means is composed of the image display device in which the second display means displays a plurality of different contents or types of information in the multiplex manner or the interchangeable manner as the second display image 24, the easily viewable display including an analogue display image and the image information in combination can be achieved.

According to this embodiment, since the meter device 1 and the multi-display 2 are arranged so as to oppose to each other with the intermediary of the transmissive reflecting member 3 that combines the respective display images by transmitting the display image on one of the meter device 1 and the multi-display 2 and reflecting the display image on the other one of them, it is effective for setting the respective display ranges 25, 18, 19 of the respective display images formed by using the two display means so as to be overlapped with respect to each other.

According to this embodiment, since the concave surface mirror member 4 that reflects the first and second display images 17, 24 combined through the transmissive reflecting member 3 toward the user P is further provided, the display images of the first and second display images 17, 24 can be displayed remotely in an enlarged scale, so that there are merits such that the visibility can be improved, and the size of the display means can be reduced.

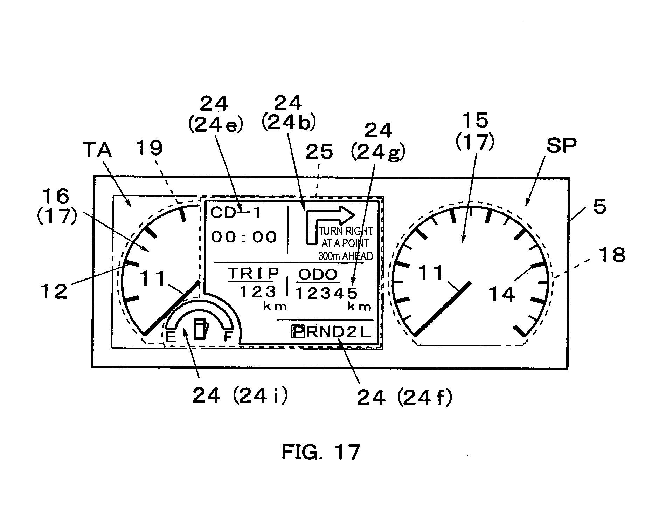

Fig. 17 shows a modification of the vehicle information display apparatus according to the invention. In this embodiment, when the second display image 24 is displayed in the detailed display mode (enlarged display mode), a part (substantially half) of the second light-emitting display image 16 which constitutes the first display image 17 is brought into a hidden state. In this modification, the same effects as the above-described embodiment are expected.

In the above-described embodiment and modification, the case in which the display means includes two display means, that is, the first and second display means (the meter device and the multi-display 2) has been described as an example. However, the number of the display means must simply be at least two, and more than two display means can also be employed.

The example in which the multi-display 2 is employed as the second display means, and the size of the display range 25 of the second display image 24 formed thereby is continuously changed (the example in which the size of the single display range 25 is changed) has shown above. However, the display range 25 may be divided into a plurality of ranges, and in this case, the enlargement or reduction must simply be performed so that the display surface area of the entire second display image 24 is changed. When the display range 25 is not divided into sections and set to a single range, the enlargement and reduction must simply be performed so that at least a part of the display surface area thereof is changed.

### [Industrial Applicability]

The invention is preferable for a vehicle information display apparatus and a method of displaying vehicle information which are applied to a moving body like an automotive vehicle as a primary example.

## Claims

1. A vehicle information display apparatus comprising: first display means for displaying first predetermined information as a first display image; second display means for displaying second predetermined information as a second display image; and control means for controlling operating states of the first and second display means, and displaying the first and second display images in a predetermined display area,
**characterized in that** the first display means is adapted to be capable of switching between a displayed state and a hidden state of a part of the first display image,
the second display means is adapted to be capable of enlarging and reducing the display range of the second display image, and
the control means switches the part of the first display image into the hidden state in association with enlargement of the display range of the second display image and switches the part of the first display image into the displayed state in association with reduction of the display range of the second display image.

2. A method of displaying vehicle information for displaying a first display image which provides a first predetermined information and whose display state is partly switched between a displayed state and a hidden state, and a second display image which provides a second predetermined information and whose display range is enlarged and reduced in a predetermined display area,
**characterized in that** a part of the first display image is switched to the hidden state in association with enlargement of the display range of the second display image, and the part of the first display image is switched to the displayed state in association with reduction of the display range of the second display image.

3. The vehicle information display apparatus according to Claim 1, **characterized in that** the control means determines whether or not the changing/switching conditions for switching the display of the first display image in association with the change of the display range of the second display image is satisfied according to the predetermined supplied information and, when the changing/switching conditions are satisfied, changes the display range of the second display image and switches the display of the first display image.

4. The vehicle information display apparatus according to Claim 1, **characterized in that** the changing/switching conditions can be changed by a user.

5. The vehicle information display apparatus according to Claim 1, **characterized in that** the first display means is a pointer-type display device, and the second display means is an image display device for displaying a plurality of different contents or types of second predetermined information as the second display image in a multiplex or interchangeable manner.

6. The vehicle information display apparatus according to Claim 1, **characterized in that** the first display means and the second display means are arranged so as to oppose to each other with the intermediary of a transmissive reflecting member that combines the respective display images by transmitting the display image on one of the first display means and the second display means and reflecting the display image on the other one of them.

7. The vehicle information display apparatus according to Claim 5, **characterized in that** a concave surface mirror member that reflects the first and second display images combined through the transmissive reflecting member toward the user is further provided.
